# FASCICULE DE BREVET EUROPEEN

(11) **EP 2 876 758 B1**
(45) Date de publication et mention de la délivrance du brevet: **06.01.2021**
(21) Numéro de dépôt: 14306812.0
(22) Date de dépôt: 14.11.2014
(51) Int. Cl.: H02G 3/12, H02G 3/18

(54) **Accessoire de griffage pour la fixation d'un support d'appareillage à une boîte murale et support d' appareillage comportant un tel accessoire**
Zubehörteil zum Festklemmen für die Befestigung einer Gerätehalterung an einer Wanddose, und Gerätehalterung, die ein solches Zubehörteil umfasst
Dogging accessory for attaching a switchgear mounting to a wall box and switchgear mounting comprising such an accessory

(30) Priorité: 22.11.2013 FR 1361529
(43) Date de publication de la demande: 27.05.2015
(73) Titulaire: Legrand France, 87000 Limoges (FR); Legrand SNC, 87000 Limoges (FR)
(72) Inventeur: Vidalinc, Julien, 87000 Limoges (FR)
(74) Mandataire: Jacobacci Coralis Harle

(56) Documents cités:
- EP-A1- 2 385 598
- EP-A1- 2 523 284
- WO-A1-2009/027469
- FR-A1- 2 796 774
- FR-A1- 2 956 259

## Description

### DOMAINE TECHNIQUE AUQUEL SE RAPPORTE L'INVENTION

La présente invention concerne un accessoire de griffage pour la fixation d'un support d'appareillage à une boîte murale, comprenant un socle de griffe et une griffe de fixation montée dans ce socle de griffe, le socle de griffe comportant deux surfaces de butée positionnées à deux hauteurs différentes et contre chacune desquelles la griffe est adaptée à s'appuyer pour pivoter entre une position escamotée et une position déployée par rapport audit socle de griffe.

Elle concerne également un support d'appareillage comportant un tel accessoire de griffage.

Elle concerne enfin un appareillage électrique comportant un tel support qui accueille un mécanisme d'appareillage.

### ARRIERE-PLAN TECHNOLOGIQUE

Un appareillage électrique à encastrer comporte généralement un support d'appareillage en forme de cadre apte à recevoir, dans son ouverture centrale, un mécanisme d'appareillage.

Ce support d'appareillage comprend habituellement des moyens d'assujettissement à une boîte murale encastrée dans une paroi d'encastrement, qui interviennent en position diamétralement opposée sur le cadre.

Il peut par exemple s'agir de simples perçages propres au passage de vis ou encore d'accessoires de griffage comportant des griffes de fixation, qui, sous le contrôle de vis de griffe, sont aptes à venir s'ancrer dans la paroi latérale de la boîte murale.

On connaît par exemple du document FR2956259 un accessoire de griffage pour la fixation d'un support d'appareillage à une boîte murale, comprenant un socle de griffe et une griffe de fixation montée dans ce socle de griffe. Il comporte en outre un écrou supérieur et un écrou inférieur sur chacun desquels la griffe s'appuie pour basculer respectivement d'une position déployée vers une position escamotée et de cette position escamotée vers la position déployée. La griffe de fixation se déploie ici à une seule hauteur sur le socle de griffe et est donc adaptée à s'accrocher à une profondeur prédéfinie de la boîte murale.

Cependant, cette boîte murale peut être positionnée plus ou moins loin de la paroi murale sur laquelle s'appuie le cadre du support d'appareillage. Il est alors nécessaire de disposer de griffes de fixation de différentes longueurs pour la fixation du support d'appareillage dans la boîte murale.

Ceci présente l'inconvénient d'entraîner la fabrication et le référencement de différents types de griffes de fixation et/ou de support d'appareillage.

Une solution possible à ce problème réside dans l'utilisation de rallonges de griffe venant se fixer sur la griffe de base afin d'augmenter sa longueur. Une telle rallonge de griffe est par exemple connue du document FR2796774. Le support d'appareillage muni d'une griffe de fixation présentant une longueur donnée peut alors être accroché dans la boîte murale, que cette boîte murale soit positionnée à proximité du cadre du support d'appareillage, en utilisant à sa longueur initiale, ou que cette boîte murale soit positionnée plus loin de ce cadre, en utilisant la griffe de fixation munie de la rallonge de griffe.

Une telle solution est cependant complexe à mettre en œuvre car elle suppose la mise en place de cette rallonge de griffe qui peut s'avérer délicate.

Une autre solution consiste à prévoir deux surfaces de butée pour la griffe, de telle sorte que celle-ci puisse être positionnée à différentes hauteurs sur le socle de griffe et puisse donc venir s'accrocher dans une boîte murale plus ou moins enfoncée dans la paroi murale.

Cependant, l'aménagement de deux surfaces de butée accessibles à la griffe est difficile compte tenu des contraintes d'encombrement de l'accessoire et au moins l'une de ces deux surfaces présente une étendue réduite de telle sorte que la butée de la griffe sur cette surface est moins efficace. Il en résulte une certaine fragilité de l'ensemble D'autres accessoires de griffage sont divulgués dans EP2385598 et EP2523284.

### OBJET DE L'INVENTION

Afin de remédier aux inconvénients précités de l'état de la technique, la présente invention propose un nouvel accessoire de griffage autorisant l'accrochage du support d'appareillage sur une boîte murale située à différentes profondeurs derrière ce support, de manière sûre, simple, rapide et économique.

Plus particulièrement, on propose selon l'invention un accessoire de griffage selon la revendication 1.

La présence d'un élément sécable permet de ménager, sur le socle de griffe, deux surfaces de butée présentant une étendue permettant un contact satisfaisant avec la griffe, de manière à assurer la stabilité de cette dernière lors du pivotement.

En effet, l'élément sécable forme l'une des deux surfaces de butée dans une première position de la griffe et peut être retiré du socle de griffe de manière à libérer de l'espace pour permettre de loger la griffe dans une deuxième position, dans laquelle la griffe vient en butée contre l'autre surface de butée lors de son actionnement.

Le retrait de l'élément sécable est ici indispensable pour libérer l'accès de la griffe de fixation à l'autre surface de butée du socle de griffe.

Seule l'une des deux surfaces de butée du socle de griffe est accessible à la griffe avant comme après le retrait de l'élément sécable. Elles sont donc alternativement accessibles à la griffe.

D'autres caractéristiques non limitatives et avantageuses de l'accessoire conforme à l'invention sont décrites dans les revendications 2 à 7.

L'invention propose également un support d'appareillage conforme à la revendication 8.

D'autres caractéristiques non limitatives et avantageuses du support d'appareillage conforme à l'invention sont énoncées dans les revendications 9 à 11.

L'invention concerne enfin un appareillage électrique tel que décrit dans la revendication 12.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un premier mode de réalisation du support d'appareillage électrique conforme à l'invention et de la boîte murale correspondante, avec un premier mode de réalisation de l'accessoire de griffage selon l'invention,
- la figure 2 est une vue schématique en perspective arrière du support d'appareillage de la figure 1,
- la figure 3 est une vue schématique en perspective du support d'appareillage de la figure 1, avec un éclaté de l'accessoire de griffage de cette figure 1,
- la figure 4 est une vue schématique de face du socle de griffe de l'accessoire de griffage de la figure 1,
- la figure 5 est une vue schématique de dessous du socle de griffe de la figure 4,
- la figure 6 est une vue schématique de dessus du socle de griffe de la figure 4,
- la figure 7 est une vue schématique de profil du socle de griffe de la figure 4,
- la figure 8 est une vue schématique en perspective arrière du socle de griffe de la figure 4, avec son élément sécable attaché,
- la figure 9 est une vue schématique similaire à celle de la figure 8, avec l'élément sécable du socle de griffe détaché,
- la figure 10 est une vue schématique en perspective avant du socle de griffe de la figure 4, avec son élément sécable attaché,
- la figure 11 est une vue schématique similaire à celle de la figure 10, avec l'élément sécable du socle de griffe détaché,
- la figure 12 est une vue schématique en perspective avant de l'accessoire de griffage de la figure 3, dans lequel la griffe est escamotée à une première hauteur du socle de griffe,
- la figure 13 est une vue schématique en perspective arrière de la figure 12,
- la figure 14 est une vue schématique en perspective avant de l'accessoire de griffage de la figure 3, dans lequel la griffe est déployée à la première hauteur du socle de griffe, en prenant appui sur la première surface de butée du socle de griffe,
- la figure 15 est une vue schématique en perspective avant de l'accessoire de griffage de la figure 3, après retrait de l'élément sécable du socle de griffe, dans lequel la griffe est escamotée à une deuxième hauteur du socle de griffe,
- la figure 16 est une vue schématique en perspective arrière de la figure 15,
- la figure 17 est une vue schématique en perspective avant de l'accessoire de griffage de la figure 3, dans lequel la griffe est déployée à la deuxième hauteur du socle de griffe, en prenant appui sur la deuxième surface de butée du socle de griffe,
- la figure 18 est une vue schématique éclatée en perspective arrière de l'accessoire de griffage de la figure 3,
- la figure 19 est une vue schématique éclatée en perspective avant de l'accessoire de griffage de la figure 3,
- la figure 20 est une vue schématique en perspective d'un deuxième mode de réalisation du support d'appareillage selon l'invention, avec un éclaté d'un deuxième mode de réalisation de l'accessoire de griffage, et,
- la figure 21 est une vue schématique en perspective du support d'appareillage de la figure 20 assemblé.

Dans la description, les termes « avant » et « arrière » seront utilisés suivant le sens du regard de l'installateur vers la paroi d'encastrement, l'arrière désignant la zone située du côté de la paroi d'encastrement et l'avant désignant la zone située du côté opposé à la paroi d'encastrement.

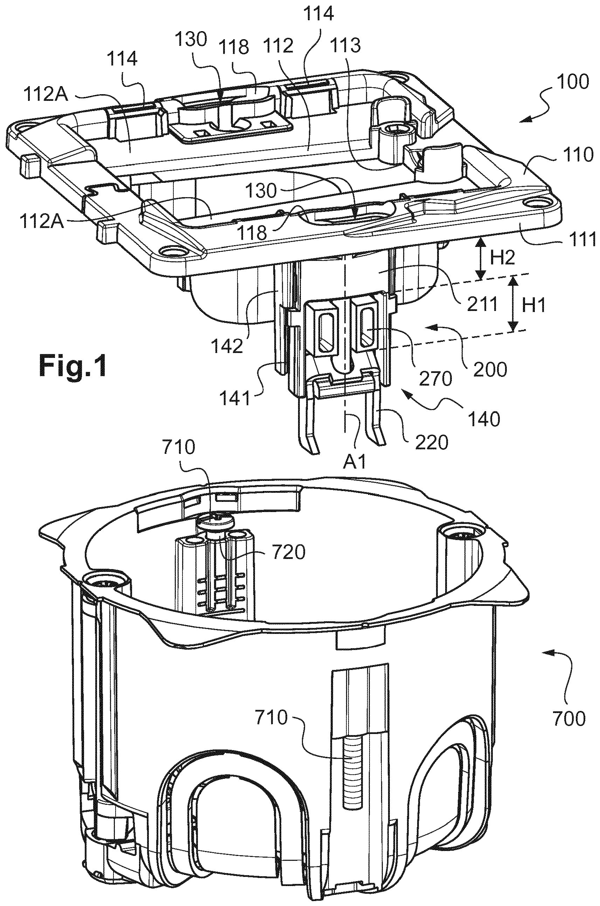

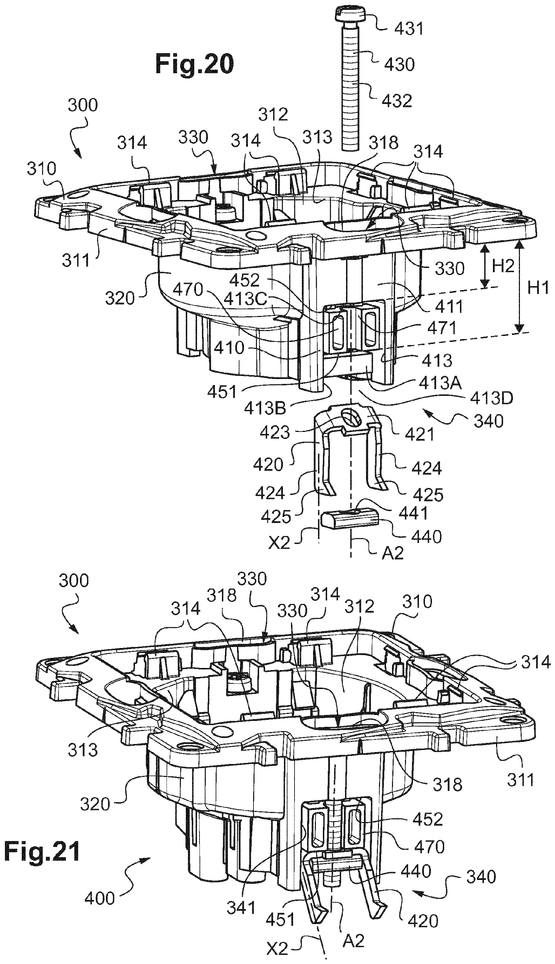

Sur les figures 1 et 20, on a représenté un support d'appareillage 100 ; 300 destiné à être fixé à une boîte murale 700 encastrée dans une paroi d'encastrement quelconque, par exemple, une paroi d'encastrement alvéolaire.

Le support d'appareillage 100 ; 300 sert au montage à l'intérieur de la boîte murale 700 d'un ou plusieurs mécanismes d'appareillage (non représenté), par exemple un mécanisme d'interrupteur, de prise de courant, de prise de téléphone ou encore de disjoncteur.

Le support d'appareillage 100 ; 300 muni de son mécanisme forme un appareillage électrique conforme à l'invention.

Il comporte un cadre 110 ; 310 plat ici de forme carrée. Ce cadre 110 ; 310 comporte ainsi quatre branches et est défini entre un bord périphérique extérieur 111 ; 311 et un bord périphérique intérieur 112 ; 312 qui délimite une ouverture centrale 113; 313 ici de forme rectangulaire (figure 1) ou circulaire (figure 20).

Le premier mode de réalisation du support d'appareillage 100, représenté sur les figures 1 à 3, est destiné à recevoir un socle (non représenté) adapté à loger le mécanisme d'appareillage (non représenté).

A cet effet, le cadre 110 comprend des moyens de réception de ce socle du mécanisme d'appareillage, notamment ici deux trottoirs 112A qui peuvent recevoir un rebord du socle.

Le deuxième mode de réalisation du support d'appareillage 300, représenté sur les figures 20 et 21, intègre le socle 320 adapté à recevoir le mécanisme d'appareillage. Le socle 320 s'étend à partir de la face arrière du cadre 310, vers l'arrière du support appareillage 300. Ce socle 320 est fermé à l'arrière et ouvert vers l'avant pour déboucher dans l'ouverture centrale 313 du cadre 310. Il est adapté à loger les éléments électriques (typiquement les bornes de connexion électrique) du mécanisme d'appareillage.

Le cadre 310 et le socle 320 du support d'appareillage 300 sont issus de moulage et forment une seule pièce monobloc.

Comme le montrent les figures 1 à 3, 20 et 21, quel que soit le mode de réalisation du support d'appareillage, il est par ailleurs prévu dans au moins deux des quatre branches du cadre 110 ; 310 des moyens de clippage 114 ; 314 d'une plaque de façade enjoliveur (non représentée) et éventuellement d'un enjoliveur (non représenté) sur le support d'appareillage 100 ; 300.

Comme on peut le voir sur les figures 1 à 3 et 20, 21, le support d'appareillage 100 ; 300 comporte par ailleurs des premiers et des seconds moyens d'assujettissement 130, 140 ; 330, 340 propres à permettre sa fixation à la boîte murale.

Les premiers moyens d'assujettissement 130 ; 330 comprennent, dans deux branches opposées du cadre 110 ; 310, un perçage en forme de trou de serrure qui permet le passage du corps fileté d'une vis de fixation 710 destiné à être vissé dans un puits de vissage 720 correspondant de la boîte murale 700.

Les seconds moyens d'assujettissement 140 ; 340 comprennent, à l'arrière de deux branches opposées du cadre 110 ; 310, deux accessoires de griffage 200 ; 400 conformes à l'invention.

Dans le cas du premier mode de réalisation du support d'appareillage 100, les seconds moyens d'assujettissement 140 comprennent également deux montants 142 qui s'étendent perpendiculairement à la face arrière du cadre 110, à partir de cette face arrière, et délimitent chacun un logement latéral 141 destiné à accueillir ledit accessoire de griffage 200.

Dans le cas du deuxième mode de réalisation du support d'appareillage 300, les seconds moyens d'assujettissement 340 sont intégrés à deux parois latérales opposées du socle 320.

Le premier mode de réalisation de l'accessoire de griffage 200, comporte alors un socle de griffe 210 rapporté sur le support d'appareillage 100, tandis que le deuxième mode de réalisation de l'accessoire de griffage 400 comporte un socle de griffe 410 intégré au support d'appareillage 300.

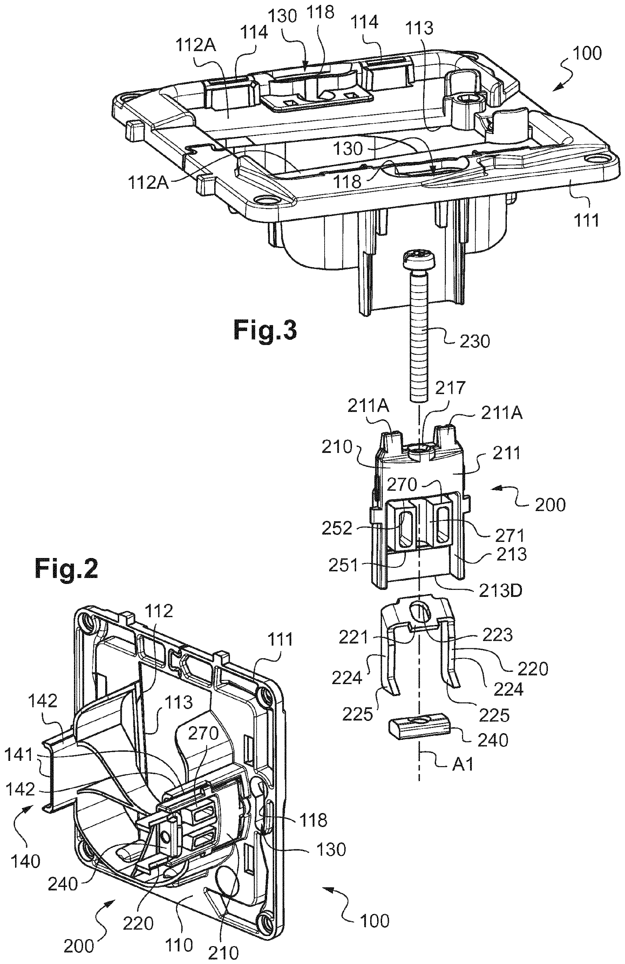

Comme le montrent les figures 1, 3, 5 à 17 et 20, cet accessoire de griffage 200 ; 400 comporte, dans le socle de griffe 210 ; 410, une griffe 220 ; 420, montée basculante sur le socle de griffe 210 ; 410 et une vis de commande 230 ; 430 engagée au travers d'une ouverture 223 ; 423 (figures 3, 18, 19, et 20) prévue dans cette griffe 220 ; 420.

L'accessoire de griffage comporte enfin un écrou 240 ; 440 vissé sur la vis de commande 230 ; 430 après que l'ouverture 223 ; 423 de la griffe 220 ; 420 a été engagée sur la vis de commande 230 ; 430. Cet écrou permet, lorsqu'un installateur visse la vis de commande 230 ; 430, de faire basculer la griffe 220 ; 420 pour qu'elle s'accroche à la paroi latérale de la boîte murale 700.

Dans les deux modes de réalisation de l'accessoire de griffage représentés sur les figures, le socle de griffe 210 ; 410 présente une forme de parallélépipède allongé selon un axe longitudinal A1 ; A2 (voir figures 3 et 20).

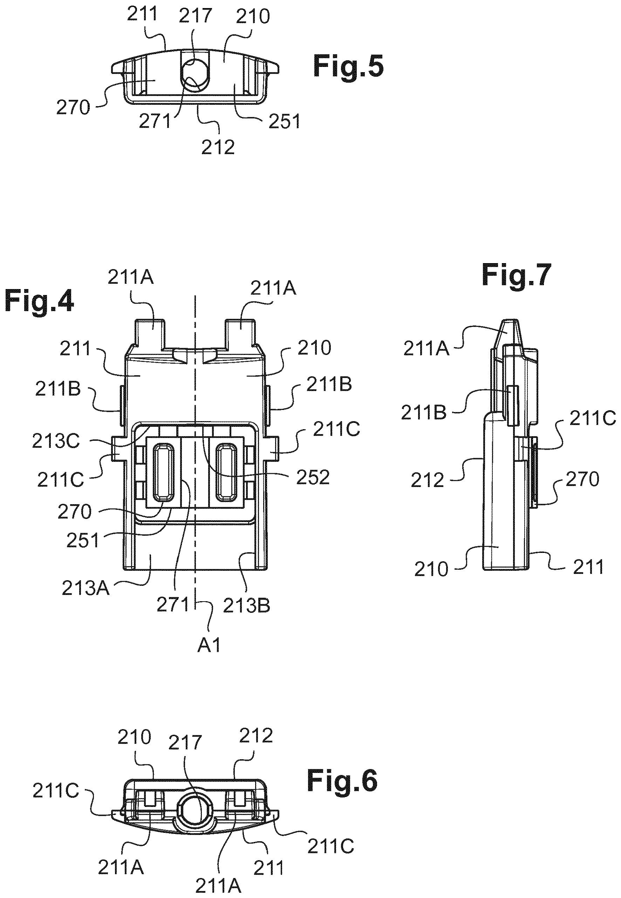

Dans le premier mode de réalisation de l'accessoire de griffage, celui-ci présente en particulier deux faces principales 211, 212 (voir notamment les figures 4 à 7) dont une face principale intérieure 212 est agencée pour être rapportée contre la face extérieure du logement latéral 141 du montant 142 du support d'appareillage 100, et dont une face principale extérieure 211 opposée (figures 4 à 7) est destinée à être tournée en regard de la paroi latérale de la boîte murale 700 (figure 1). Ces deux faces principales 211, 212 sont reliées par la tranche du socle de griffe.

Le socle de griffe de l'accessoire de griffage s'étend alors perpendiculairement au cadre 110 du support d'appareillage 100.

Ce socle de griffe 210 comporte des moyens de montage permettant à l'installateur de le fixer rigidement dans le logement latéral 141 correspondant du support d'appareillage 100. Ces moyens de montage sont ici des moyens d'encliquetage, ce qui permet de monter et de démonter à volonté l'accessoire de griffage du support d'appareillage 100, selon que les premiers ou les seconds moyens d'assujettissement 130, 140 sont utilisés pour fixer le support d'appareillage 100 à la boîte murale.

La position relative du socle de griffe 210 et du support d'appareillage 100 est ici prédéterminée et unique. En particulier, le socle de griffe 210 ne peut être rapporté sur le support d'appareillage 100 qu'à une seule et même hauteur par rapport au cadre 110 de ce support.

Comme le montrent la figure 3, ces moyens de montage comportent en particulier deux ergots 211A qui s'élèvent parallèlement à l'axe A1 à partir de l'extrémité avant du socle de griffe 210 et qui sont adaptés à s'engager dans des ouvertures correspondantes (non visibles sur les figures) prévues dans les branches du cadre 110 du support d'appareillage 100. Leur emboîtement dans les branches du cadre 110 correspondantes permet de guider le montage de l'accessoire sur le support d'appareillage.

Ces moyens de montage comportent également deux dents d'encliquetage 211B qui se présentent sous la forme de nervures s'étendant parallèlement à l'axe A1 le long de la tranche du socle de griffe 210, et qui sont adaptées à s'accrocher à des rainures prévues en correspondance sur les bords du logement latéral 141 du montant 142 du support d'appareillage 100.

Ces moyens de montage comportent enfin deux plots 211C qui s'étendent perpendiculairement à l'axe A1, à partir des tranches du socle de griffe 210 et qui sont agencés pour se loger dans des cavités prévues en correspondance en creux dans les bords du logement latéral 141 du support d'appareillage 100. Ces deux plots 211C permettent, une fois que le socle de griffe 210 est encliqueté dans son logement latéral 141, de bloquer rigidement tout mouvement du socle de griffe 210 par rapport au support d'appareillage 100 suivant l'axe longitudinal A1.

Dans le cas du deuxième mode de réalisation, représenté sur les figures 20 et 21, le socle de griffe 410 vient de formation avec le socle 320 du mécanisme d'appareillage et de ce fait avec le cadre 310 du support d'appareillage 300. Il comporte une face principale extérieure 411 qui s'étend perpendiculairement au cadre 310 du support d'appareillage 300.

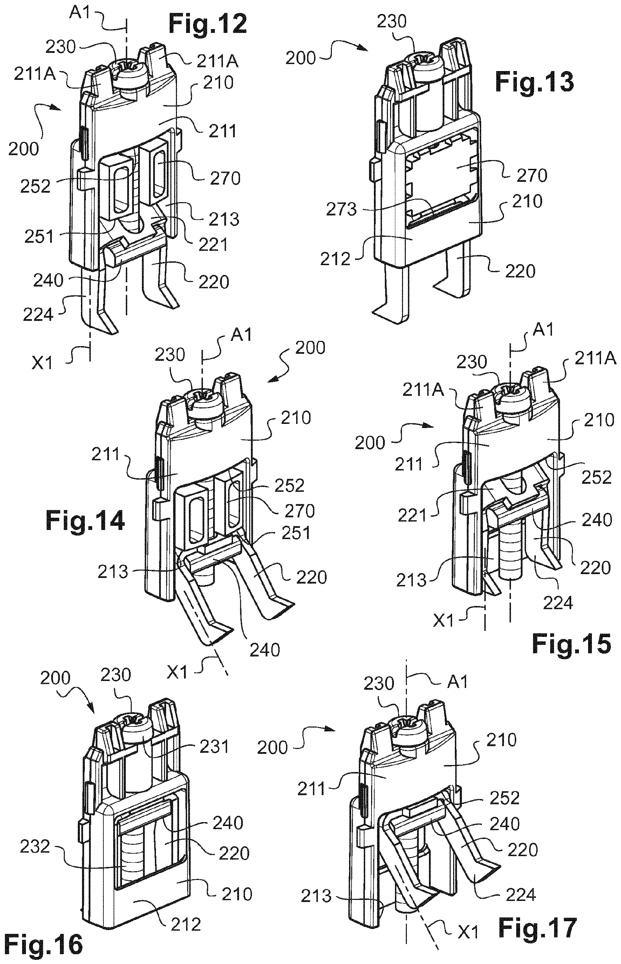

Comme le montrent plus particulièrement les figures 12, 14, 15, 17, et 20, quel que soit le mode de réalisation de l'accessoire de griffage, son socle de griffe 210 ; 410 présente en creux de sa face principale extérieure 211 ; 411, un logement d'accueil 213 ; 413 pour loger la griffe 220 ; 420 et l'écrou 240 ; 440.

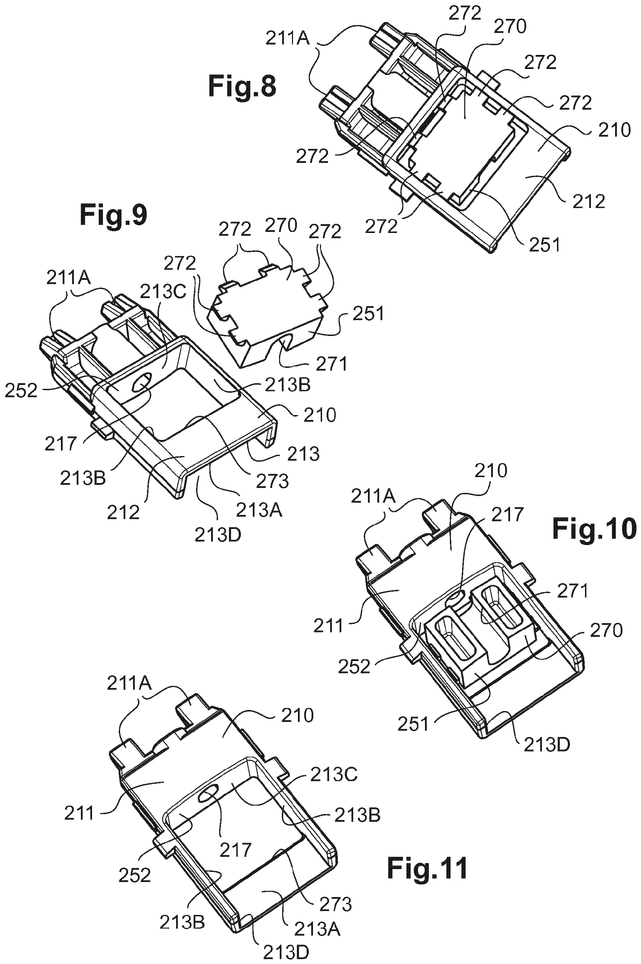

Ce logement d'accueil 213 ; 413 est délimité par un fond 213A ; 413A parallèle à la face principale intérieure 212 du socle de griffe 210, deux faces latérales 213B; 413B et une face d'extrémité avant 213C; 413C perpendiculaire audit fond (voir figures 4 et 11). Il est en revanche ouvert du côté de l'extrémité arrière 213D ; 413D du socle de griffe 210 ; 410 (figures 3, 9, 11 et 20).

Comme le montrent plus particulièrement les figures 3, 18, 19, et 20 la griffe de fixation 220 ; 420 présente globalement une configuration en U, avec une paroi principale 221 ; 421 et deux jambages latéraux.

Ladite paroi principale 221 ; 421 est rectangulaire et plane, elle comporte dans sa partie médiane l'ouverture 223 ; 423. Les deux jambages latéraux forment deux pattes d'accrochage 224 ; 424 parallèles d'axes X1 ; X2 (figures 12, 14, 15, 17, 20) qui s'étendent à partir des extrémités de la paroi principale 221 ; 421. Les extrémités libres de ces deux pattes d'accrochage 224 ; 424 présentent chacune, sur leur tranche extérieure destinée à être tournée vers la paroi latérale de la boîte murale, une dent 225 ; 425 pointue adaptée à s'accrocher à cette paroi latérale.

Cette griffe de fixation est issue d'une opération de découpe et de pliage d'un feuillard métallique brut. Elle est donc de fabrication peu onéreuse.

Cette griffe 220 ; 420 est montée mobile dans le logement d'accueil 213 ; 413 du socle de griffe 210 ; 410 pour basculer autour d'un axe orthogonal à l'axe longitudinal A1 ; A2 du socle de griffe, entre une position escamotée (figures 12, 13, 15, 16) dans laquelle elle s'étend dans le prolongement du socle de griffe et une position déployée (figures 14, 17), inclinée par rapport à la position escamotée, dans laquelle elle fait saillie du socle de griffe. Dans sa position déployée, la griffe 220 ; 420 fait plus précisément saillie de la face principale extérieure 211 ; 411 du socle de griffe 210 ; 410.

Ainsi, en position escamotée, l'axe X1 ; X2 des pattes d'accrochage 224 ; 424 de la griffe s'étend parallèlement à l'axe longitudinal A1 ; A2 du socle de griffe, tandis qu'en position déployée, les pattes d'accrochage 224 ; 424 de la griffe font saillie hors de ce logement d'accueil, leur axe X1 ; X2 étant incliné par rapport à l'axe longitudinal A1 ; A2 du socle de griffe. Ainsi, dans la position déployée, leurs dents 225 ; 425 peuvent s'accrocher à la paroi latérale de la boîte murale 700.

La vis de commande 230 ; 430 est une vis classique et peu onéreuse, telle qu'on peut la trouver dans le commerce.

Elle présente une tête de manœuvre 231 ; 431 avec une empreinte ici cruciforme, et un corps fileté 232 ; 432.

Telle que représentée sur les figures 12 à 17 et 21, cette vis de commande 230 ; 430 est engagée dans un puits de réception traversant 217 ; 417 du socle de griffe 210 ; 410 qui s'étend selon l'axe longitudinal A1 ; A2 et qui débouche, d'un côté, dans le logement d'accueil 213 ; 413, et, de l'autre, sur une face d'extrémité avant du socle de griffe 210 ; 410 appartenant à la tranche de ce socle.

Cette face d'extrémité avant du socle de griffe 210 ; 410 se situe soit entre les deux ergots 211A dans le cas du premier mode de réalisation (figure 3), soit en regard d'une ouverture du cadre 410 dans le cas du deuxième mode de réalisation (figure 21). La face d'extrémité avant du socle de griffe 210 forme ainsi un appui pour la tête de manœuvre 231 ; 431 de la vis de commande 230 ; 430.

Quel que soit le mode de réalisation considéré, la tête de manœuvre 231 ; 431 de la vis de commande 230 ; 430 est accessible à l'installateur au travers d'une ouverture 118 ; 318 (figures 1 et 20) prévue en correspondance dans le cadre 110 ; 310 du support d'appareillage, lorsque l'accessoire est monté sur le support dans le cas du premier mode de réalisation. Cette ouverture 118 ; 318 correspond ici au perçage en forme de trou de serrure des premiers moyens d'assujettissement 130.

La vis de commande 230 ; 430 est montée libre en rotation dans le puits de réception traversant 217 ; 417 du socle de griffe 210 ; 410.

Elle traverse de part en part le logement d'accueil 213 ; 413 du socle de griffe, en passant au travers de l'ouverture 223 ; 423 prévue dans la paroi principale 221 ; 421 de la griffe.

La vis de commande traverse également l'écrou 240 ; 440 qui est situé du côté de son extrémité libre.

L'écrou 240 ; 440 des premier et deuxième modes de réalisation de l'accessoire de griffage 200 ; 400 présente ici une forme sensiblement parallélépipédique. Il est positionné contre le fond 213A ; 413A du logement d'accueil 213 ; 413 prévu dans le socle de griffe 210 ; 410.

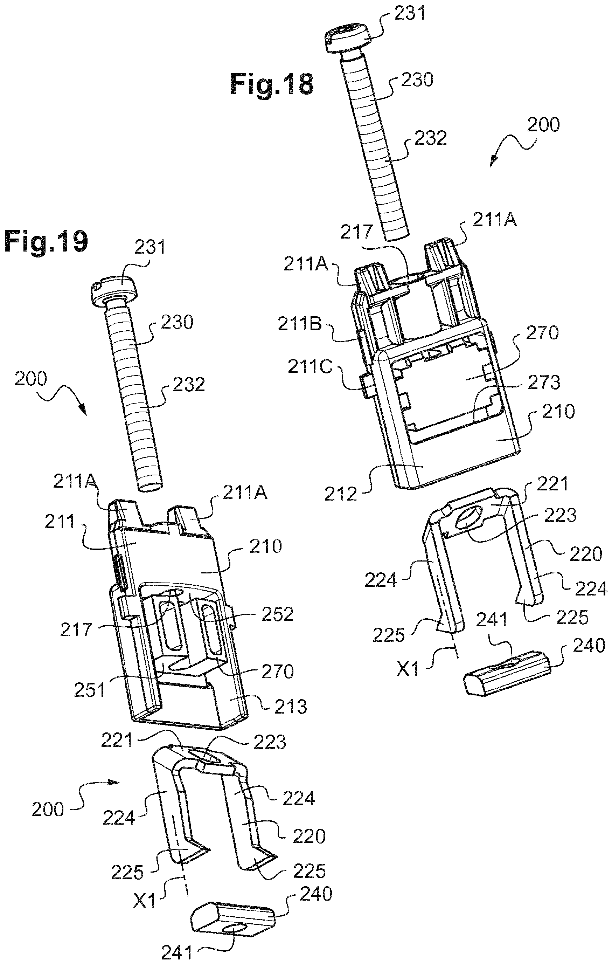

Cet écrou 240 ; 440 est traversé par un puits taraudé 241 ; 441 (figures 18 et 19) avec lequel le corps fileté 232 ; 432 de la vis de commande est en prise. Il est guidé en translation suivant l'axe longitudinal A1 ; A2 non seulement par la vis de commande et par le fond 213A ; 413A du logement d'accueil 213 ; 413, mais également par les faces latérales 213B ; 413B de ce logement d'accueil 213 ; 413 qui s'étendent, à une distance l'une de l'autre égale, au jeu près, à la largeur de l'écrou 240 ; 440.

Les faces latérales 213B ; 413B de ce logement d'accueil 213 ; 413 permettent ainsi en outre de bloquer la mobilité en rotation de l'écrou 240 ; 440 autour de l'axe longitudinal du socle de griffe 210 ; 410.

Tels que représentés notamment sur les figures 18, 19 et 20, les axes X1 ; X2 parallèles des pattes d'accrochage 224 ; 424 de la griffe 220 ; 420 sont inclinés par rapport au plan de la paroi principale 221 ; 421 de la griffe.

L'écrou 240 ; 440 présente quant à lui une face supérieure plane perpendiculaire à l'axe longitudinal A1 ; A2 du socle de griffe. De cette manière, lorsque l'installateur visse la vis de commande, la paroi principale 221 ; 421 de la griffe de commande est poussée par la face supérieure de l'écrou 240 ; 440 contre une l'une ou l'autre des deux surfaces de butée du socle de griffe, si bien qu'elle se redresse progressivement depuis sa position escamotée jusqu'à sa position déployée dans laquelle la paroi principale 221 ; 421 de la griffe s'applique parfaitement contre la face supérieure de l'écrou.

Plus précisément ici, le socle de griffe 210 ; 410 comporte deux surfaces de butée 251, 252 ; 451, 452 contre lesquelles la griffe 220 ; 420 est adaptée à s'appuyer pour pivoter entre sa position escamotée et sa position déployée par rapport audit socle de griffe.

On entend ici par surface de butée toute surface ou pluralité de surfaces contre lesquelles différentes parties de la griffe 220 ; 420 vient s'appuyer simultanément pour passer de sa position escamotée à sa position déployée.

Ainsi, un ensemble de deux surfaces séparées contre lesquelles la griffe vient s'appuyer simultanément forme une surface de butée unique au sens de l'invention.

Ces deux surfaces de butée 251, 252 ; 451, 452 sont distinctes de la face supérieure de l'écrou 240 ; 440. Cette face supérieure de l'écrou 240 ; 440 est seulement une face de poussée de la griffe de fixation.

Le socle de griffe 220 ; 420 comporte ainsi une première surface de butée 251 ; 451 et une deuxième surface de butée 252 ; 452 positionnée à une hauteur différente de celle de la première surface de butée.

Plus précisément, ces deux surfaces de butée distinctes s'étendent à des hauteurs différentes le long de l'axe longitudinal A1 ; A2 du socle de griffe 210 ; 410. Elles sont de préférence perpendiculaires à cet axe longitudinal A1 ; A2.

Ces deux surfaces de butée étant disposées à des hauteurs différentes du socle de griffe, la distance H1, H2 (figures 1 et 20) totale entre la face arrière de cadre 110 ; 310 du support d'appareillage 100 ; 300 et les dents 225 ; 425 de la griffe est différente selon que celle-ci prend appui contre la première ou la deuxième surface de butée.

Ces première et deuxième surfaces de butée 251, 252 ; 451, 452 sont de préférence parallèles.

Elles sont en outre parallèles à la face arrière du cadre 110 ; 310 du support d'appareillage 100 ; 300 sur lequel l'accessoire de griffage 200 est monté ou auquel cet accessoire de griffage 400 est intégré.

Par convention, ici, la première surface de butée 251 ; 451 est la surface de butée la plus proche de l'extrémité arrière 213D ; 413D du socle de griffe 210 ; 410, tandis que la deuxième surface de butée 252 ; 452 est la surface de butée la plus éloignée de cette extrémité arrière 213D ; 413D du socle de griffe 210 ; 410.

En conséquence, lorsque l'accessoire de griffage 210 ; 410 est solidaire du support d'appareillage 100 ; 300, la première surface de butée 251 ; 451 est la surface de butée la plus éloignée de la face arrière du cadre 110 ; 310 du support d'appareillage 100 ; 300, tandis que la deuxième surface de butée 252 ; 452 est la surface de butée la plus proche de la face arrière du cadre 110 ; 310 du support d'appareillage 100 ; 300.

De manière remarquable, l'une des surfaces de butée 251 ; 451 appartient à un élément sécable 270 ; 470 du socle de griffe 210 ; 410, adapté à être retiré du socle de griffe.

Il s'agit ici de la première surface de butée 251 ; 451.

Cet élément sécable 270 ; 470 est notamment représenté sur les figures 8, 9 et 10 dans le cas du premier mode de réalisation. L'élément sécable 470 du deuxième mode de réalisation est identique à celui représenté sur ces figures.

Ainsi, cet élément sécable 270 ; 470 est formé d'une seule pièce avec le socle de griffe 210 ; 410 et est, à l'issue de l'opération de moulage, raccordé à ce dernier par des zones de liaison sécables 272 ; 472 (figures 8, 9).

Cet élément sécable et le socle de griffe associé sont ici réalisés d'une seule pièce par moulage d'une matière plastique isolante.

Cet élément sécable 270 ; 470 est logé dans le logement d'accueil 213 ; 413 du socle de griffe 210 ; 410.

L'élément sécable 270; 470 présente une forme globalement parallélépipédique, avec une rainure centrale 271 ; 471 adaptée à être traversée par la vis de commande 230 ; 430 (figures 6, 9 et 10).

Les zones de liaison sécables 272 ; 472 se présentent sous la forme de languettes qui présentent une épaisseur beaucoup plus fine que l'épaisseur totale de l'élément sécable.

Ces zones de liaison sécables 272 ; 472 relient l'élément sécable 270 ; 470 à la face d'extrémité avant 213C ; 413C du logement 213 ; 413 du socle de griffe et aux faces latérales 213B ; 413B de ce logement.

Elles sont réparties le long de trois côtés de l'élément sécable 270 ; 470.

La deuxième surface de butée 252 ; 452 appartient à une partie inamovible du socle de griffe 210 ; 410, qui est rendue accessible à la griffe après le retrait dudit élément sécable 270 ; 470.

En outre, après le retrait de l'élément sécable 270 ; 470, il n'est plus possible de réutiliser la première surface de butée 251 ; 451 puisque l'élément sécable est définitivement retiré du socle de griffe 270 ; 470.

Plus précisément, ici, cette deuxième surface de butée 252 ; 452 appartient à la face d'extrémité avant 213C ; 413C du logement d'accueil 213; 413 prévu dans le socle de griffe pour accueillir la griffe 220 ; 420 et l'écrou 240 ; 440.

Ainsi, l'utilisateur de l'accessoire de griffage 200 ; 400 a le choix de la distance à laquelle il souhaite que la griffe 220 ; 420 s'accroche par rapport au cadre 110 du support d'appareillage 100.

S'il souhaite que la griffe 220 ; 420 s'accroche le plus loin possible du cadre 110 ; 310 dans la paroi d'encastrement, il conserve l'élément sécable 270 ; 470 en place pour rendre active la première surface de butée 251 ; 451 et fixe la griffe 220; 420 dans une première position dans le socle de griffe 210 ; 410, représentée sur les figures 1, 12, 13, 14, dans laquelle la paroi principale 221 ; 421 de la griffe 220 ; 420 prend appui contre cette première surface de butée 251 ; 451 lorsque la vis de commande est actionnée.

L'utilisateur place tout d'abord la griffe 220 ; 420 dans la position escamotée, représentée sur les figures 1, 12 et 13. A cet effet, il fait passer la vis de commande 230 ; 430 à travers le puits de réception 217 ; 417 du socle de griffe 210 ; 410, la rainure centrale de l'élément sécable 270 ; 470, l'ouverture 223 ; 423 de la griffe 220 ; 420 et l'écrou 240 ; 440, dans cet ordre.

Il visse ensuite la vis de commande 230 ; 430. Ce faisant, l'écrou 240 ; 440 se déplace en translation dans le logement d'accueil 213 ; 413 du socle de griffe, en remontant vers la tête de la vis de commande 230 ; 430.

Ce faisant, également, l'écrou 240 ; 440 vient en appui contre la face arrière de la paroi principale 221 ; 421 de la griffe, orientée vers les pattes d'accrochage 224 ; 424. Cette paroi principale bascule jusqu'à ce que l'écrou 240 ; 440 vienne plaquer cette paroi principale 221 ; 421 contre la première surface de butée 251 ; 451. La griffe 220 ; 420 se trouve alors dans sa position déployée (figures 14 et 21), dans laquelle les pattes d'accrochage 224 ; 424 s'étendent en saillie du socle de griffe 220 ; 420, en étant inclinée par rapport à l'axe A1 ; A2 de ce socle.

Ainsi, lorsque la griffe se trouve en appui contre cette première surface de butée 251 ; 451, elle vient s'accrocher à une profondeur maximale dans la paroi d'encastrement.

Notons que le vissage de la vis de commande 230 ; 240 laisse intact les liaisons sécables 272 ; 472 de l'élément sécable.

Si l'utilisateur souhaite que la griffe 220 ; 420 s'accroche à une profondeur réduite dans la paroi d'encastrement, l'utilisateur ôte l'élément sécable 270 ; 470 du socle de griffe 220, 420 pour rendre active la deuxième surface de butée 252 ; 452 du socle de griffe 210 ; 410.

Pour cela, il exerce sur l'élément sécable 270 ; 470 une pression à travers une fenêtre 273 ménagée dans le fond 213A ; 413A du logement d'accueil 213 ; 413 du socle de griffe. Cette fenêtre 273 est notamment visible dans le cas du premier mode de réalisation sur les figures 9, 11 et 13.

Sous la pression exercée par les doigts de l'utilisateur, les liaisons sécables entre l'élément sécable et le socle de griffe se cassent, et l'élément sécable 270 ; 470 est ainsi désolidarisé du socle de griffe.

Il est également possible de séparer l'élément sécable par utilisation d'un outil, tel que la pointe d'un tournevis plat, ou un couteau d'électricien.

Ce faisant, il libère une partie du logement d'accueil 213 ; 413 qui était initialement occupée par cet élément sécable.

Ainsi la face d'extrémité avant 213C ; 413C du logement d'accueil 213 ; 413 devient accessible à la griffe 220 ; 420 : lorsque l'utilisateur visse la vis de commande 230 ; 430, le déplacement de la griffe 220 ; 420 sous l'effet de la translation de l'écrou 240 ; 440 n'est plus stoppé par l'élément sécable 270 ; 470. L'écrou 240 ; 440 remonte alors en direction de la tête de la vis de commande 240 ; 440, jusqu'à plaquer la paroi principale 221 ; 421 de la griffe 220 ; 420 contre la deuxième surface de butée 252 ; 452, c'est-à-dire ici la face d'extrémité avant 213C ; 413C du logement d'accueil 213 ; 413 du socle de griffe 220 ; 420.

Initialement dans la position escamotée, représentée sur les figures 15 et 16, lorsque l'écrou plaque la paroi principale 221 ; 421 de la griffe 220 ; 420 contre la deuxième surface de butée, la griffe bascule vers sa position déployée (figure 17), dans laquelle les pattes d'accrochage 224 ; 424 s'étendent en saillie du socle de griffe 220 ; 420, en étant inclinée par rapport à l'axe A1 ; A2 de ce socle.

La griffe 220 ; 420 vient alors s'accrocher à une profondeur réduite dans la paroi d'encastrement.

Notons que, dans chacune des situations correspondant respectivement au cas où l'élément sécable 270 ; 470 est conservé dans le socle, et au cas où l'élément sécable 270 ; 470 est retiré du socle, une seule surface de butée 251, 252 ; 451, 452 est accessible à la griffe 220 ; 420 pour son pivotement.

Le retour de la griffe depuis la position déployée vers sa position escamotée est possible après le dévissage de la vis de commande.

## Revendications

1. Accessoire de griffage (200 ; 400) pour la fixation d'un support d'appareillage (100 ; 300) à une boîte murale (700), comprenant un socle de griffe (210 ; 410) et une griffe (220 ; 420) de fixation montée dans ce socle de griffe (210 ; 410), le socle de griffe (210 ; 410) comportant deux surfaces de butée (251, 252 ; 451, 452) positionnées à deux hauteurs différentes, **caractérisé en ce que** et la griffe (220 ; 420) est adaptée à s'appuyer contre chacune desdites surfaces de butée (251, 252 ; 451, 452) pour pivoter depuis une position escamotée vers une position déployée par rapport audit socle de griffe (210 ; 410), et **en ce qu'**une des deux surfaces de butée (251 ; 451) appartient à un élément sécable (270 ; 470) du socle de griffe (210 ; 410), adapté à être retiré du socle de griffe (210 ; 410).

2. Accessoire de griffage (200 ; 400) selon la revendication 1, dans lequel l'autre surface de butée (252 ; 452) appartient à une partie inamovible du socle de griffe (210 ; 410), qui est rendue accessible à la griffe (220 ; 420) après le retrait dudit élément sécable (270 ; 470).

3. Accessoire de griffage (200 ; 400) selon l'une des revendications précédentes, dans lequel lesdites surfaces de butée (251, 252 ; 451, 452) sont parallèles.

4. Accessoire de griffage (200 ; 400) selon l'une des revendications précédentes, dans lequel il est prévu une vis de commande (230 ; 430) et un écrou (240 ; 440), agencés de telle sorte que le vissage de la vis (230 ; 430) dans l'écrou (240 ; 440) engendre le passage de ladite griffe (220 ; 420) de sa position escamotée vers sa position déployée.

5. Accessoire de griffage (200 ; 400) selon l'une des revendications 1 à 4, dans lequel la griffe (220 ; 420) présente une configuration en U, avec une paroi principale (221 ; 421) et deux jambages latéraux (224 ; 424), ladite paroi principale (221 ; 421) étant adaptée à prendre appui contre chacune des deux surfaces de butée (251, 252 ; 451, 452).

6. Accessoire de griffage (200) selon l'une des revendications 1 à 5, dans lequel il est prévu des moyens de montage (211A, 211B, 211C) adaptés à coopérer avec ledit support d'appareillage (100) pour rapporter cet accessoire (200) sur le support (100).

7. Accessoire de griffage (400) selon l'une des revendications 1 à 5, dans lequel le socle de griffe (410) vient de formation avec ledit support d'appareillage (300).

8. Support d'appareillage (100 ; 300) électrique comprenant, pour sa fixation à une boîte murale (700), au moins un accessoire de griffage (200 ; 400) selon l'une des revendications précédentes, dans lequel ledit support d'appareillage (100 ; 300) comporte un cadre (110 ; 310) entourant une ouverture d'accueil (113 ; 313) d'un mécanisme d'appareillage, à l'arrière duquel s'étend, perpendiculairement à ce cadre, le socle de griffe (210 ; 410) de chaque accessoire de griffage (200 ; 400).

9. Support d'appareillage (100) électrique selon la revendication précédente, dans lequel il est prévu, pour chaque socle de griffe (210) rapporté sur le support d'appareillage (100), un logement (141) adapté à accueillir ce socle de griffe (210).

10. Support d'appareillage (300) électrique selon la revendication 8, dans lequel chaque socle de griffe (410) vient de formation avec le cadre (310) du support d'appareillage.

11. Support d'appareillage (100 ; 300) électrique selon l'une des revendications 8 à 10, dans lequel les surfaces de butée (251, 252 ; 451, 452) de chaque socle de griffe (210 ; 410) sont parallèles à la face arrière du cadre (110 ; 310) du support d'appareillage, et éloignées de cette face arrière de deux distances (H1 ; H2) différentes.

12. Appareillage électrique comprenant un support d'appareillage (100 ; 300) selon l'une des revendications 8 à 11, et un mécanisme d'appareillage monté sur ce support d'appareillage.

## Patentansprüche

1. Zubehörteil zum Festklemmen (200; 400) für die Befestigung einer Gerätehalterung (100; 300) an einer Wanddose (700), das einen Krallensockel (210; 410) und eine in dem Krallensockel (210; 410) montierte Befestigungskralle (220; 420) aufweist, wobei der Krallensockel (210; 410) zwei in verschiedenen Höhen angeordnete Anschlagsflächen (251, 252; 451, 452) aufweist, **dadurch gekennzeichnet, daß** die Kralle (220; 420) dazu ausgelegt ist, sich auf jeder dieser Anschlagsflächen (251, 252; 451, 452) abzustützen, um von einer zurückgezogenen Stellung in eine gegenüber dem Krallensockel (210; 410) ausgebrachte Stellung zu schwenken, und daß eine der beiden Anschlagsflächen (251; 451) zu einem abtrennbaren Element (270; 470) des Krallensockels (210; 410) gehört, das dazu ausgelegt ist, vom Krallensockel (210; 410) entfernt zu werden.

2. Zubehörteil zum Festklemmen (200; 400) gemäß Anspruch 1, bei dem die andere Anschlagsfläche (252; 452) zu einem nicht abtrennbaren Teil des Krallensockels (210; 410) gehört, der für die Kralle (220; 420) nach dem Entfernen des abtrennbaren Elements (270; 470) zugänglich gemacht wird.

3. Zubehörteil zum Festklemmen (200; 400) gemäß einem der vorangehenden Ansprüche, bei dem die Anschlagsflächen (251, 252; 451, 452) parallel sind.

4. Zubehörteil zum Festklemmen (200; 400) gemäß einem der vorangehenden Ansprüche, bei dem eine Steuerschraube (230; 430) und eine Mutter (240; 440) vorgesehen sind, die so angeordnet sind, daß das Einschrauben der Schraube (230; 430) in die Mutter (240; 440) den Übergang der Kralle (220; 420) aus ihrer zurückgezogenen Stellung in ihre ausgebrachte Stellung bewirkt.

5. Zubehörteil zum Festklemmen (200; 400) gemäß einem der Ansprüche 1 bis 4, bei dem die Kralle (220; 420) eine U-Form mit einer Hauptwandung (221; 421) und zwei seitlichen Schenkeln (224; 424) aufweist, wobei die Hauptwandung (221; 421) dazu ausgelegt ist, sich auf jeder der beiden Anschlagsflächen (251, 252; 451, 452) abzustützen.

6. Zubehörteil zum Festklemmen (200) gemäß einem der Ansprüche 1 bis 5, bei dem Montagemittel (211A, 211B, 211C) vorgesehen sind, die dazu ausgelegt sind, mit der Gerätehalterung (100) zusammenzuwirken, um das Zubehörteil (200) an der Halterung (100) anzubringen.

7. Zubehörteil zum Festklemmen (400) gemäß einem der Ansprüche 1 bis 5, bei dem der Krallensockel (410) mit der Gerätehalterung (300) zusammen einstückig ausgebildet ist.

8. Elektrische Gerätehalterung (100; 300), die für deren Befestigung an einer Wanddose (700) wenigstens ein Zubehörteil zum Festklammern (200; 400) gemäß einem der vorangehenden Ansprüche aufweist, bei der die Gerätehalterung (100; 300) einen eine Öffnung (113; 313) für die Aufnahme eines Gerätemechanismus umrandenden Rahmen (110; 310) aufweist, an dessen Rückseite sich der Krallensockel (210; 410) jedes Zubehörteils zum Festklemmen (200; 400) senkrecht zu diesem Rahmen erstreckt.

9. Elektrische Gerätehalterung (100) gemäß dem vorangehenden Anspruch, bei der für jeden an der Gerätehalterung (100) angebrachten Krallensockel (210) eine Vertiefung (141) vorgesehen ist, die dazu ausgelegt ist, den Krallensockel (210) aufzunehmen.

10. Elektrische Gerätehalterung (300) gemäß Anspruch 8, bei der jeder Krallensockel (410) mit dem Rahmen (310) der Gerätehalterung einstückig ausgebildet ist.

11. Elektrische Gerätehalterung (100; 300) gemäß einem der Ansprüche 8 bis 10, bei der die Anschlagsflächen (251, 252; 451, 452) jedes Krallensockels (210; 410) parallel zur Rückseite des Rahmens (110; 310) der Gerätehalterung und in zwei verschiedenen Entfernungen (H1; H2) von dieser Rückseite verlaufen.

12. Elektrisches Gerät, das eine Gerätehalterung (100; 300) gemäß einem der Ansprüche 8 bis 11 und einen auf der Gerätehalterung angebrachten Gerätemechanismus aufweist.

## Claims

1. A catch assembly (200; 400) for fastening an accessory support (100; 300) to a wall box (700), the catch assembly comprising a catch base (210; 410) and a fastener catch (220; 420) that is mounted in the catch base (210; 410), the catch base (210; 410) including two abutment surfaces (251, 252; 451, 452) that are positioned at two different heights, the catch assembly being **characterized in that** the catch (220; 420) is adapted to bear against each of said abutment surfaces (251, 252; 451, 452) so as to pivot relative to said catch base (210; 410) from a retracted position to a deployed position, and **in that** one of the two abutment surfaces (251; 451) belongs to a breakable element (270; 470) of the catch base (210; 410), which breakable element is adapted to be removed from the catch base (210; 410).

2. A catch assembly (200; 400) according to claim 1, wherein the other abutment surface (252; 452) belongs to a non-removable portion of the catch base (210; 410), which non-removable portion becomes accessible to the catch (220; 420) on removal of said breakable element (270; 470).

3. A catch assembly (200; 400) according to any preceding claim, wherein said abutment surfaces (251, 252; 451, 452) are parallel.

4. A catch assembly (200; 400) according to any preceding claim, wherein a control screw (230; 430) and a nut (240; 440) are provided, arranged in such a manner that turning the screw (230; 430) in the nut (240; 440) causes said catch (220; 420) to pass from its retracted position to its deployed position.

5. A catch assembly (200; 400) according to any one of claims 1 to 4, wherein the catch (220; 420) presents a U-shaped configuration, with a main wall (221; 421) and two side legs (224; 424), said main wall (221; 421) being adapted to bear against each of the two abutment surfaces (251, 252; 451, 452).

6. A catch assembly (200) according to any one of claims 1 to 5, wherein mounting means (211A, 211B, 211C) are provided that are adapted to co-operate with said accessory support (100) for fitting the assembly (200) on the support (100).

7. A catch assembly (400) according to any one of claims 1 to 5, wherein the catch base (410) is formed integrally with said accessory support (300).

8. An electrical accessory support (100; 300) including at least one catch assembly (200; 400) according to any preceding claim, for fastening said accessory support (100; 300) to a wall box (700), wherein said accessory support (100; 300) includes a frame (110; 310) that surrounds a reception opening (113; 313) for receiving an accessory mechanism, the catch base (210; 410) of each catch accessory (200; 400) extending at the rear of said frame (110; 310), perpendicularly thereto.

9. An electrical accessory support (100) according to the preceding claim, wherein, for each catch base (210) fitted on the accessory support (100), a housing (141) is provided that is adapted to receive the catch base (210).

10. An electrical accessory support (300) according to claim 8, wherein each catch base (410) is formed integrally with the frame (310) of the accessory support.

11. An electrical accessory support (100; 300) according to any one of claims 8 to 10, wherein the abutment surfaces (251, 252; 451, 452) of each catch base (210; 410) are parallel to the rear face of the frame (110; 310) of the accessory support, and are spaced apart from the rear face by two different distances (H1; H2).

12. An electrical accessory comprising an accessory support (100; 300) according to any one of claims 8 to 11, and an accessory mechanism mounted on the accessory support.
